# EUROPEAN PATENT APPLICATION

(11) **EP 1 923 422 A1**
(43) Date of publication of application: **21.05.2008**
(21) Application number: 06797775.1
(22) Date of filing: 05.09.2006
(51) Int. Cl.: C08J 9/14, C08L 61/06

(54) **EXPANDABLE RESOL TYPE PHENOLIC RESIN MOLDING MATERIAL AND PHENOLIC RESIN FOAM**

(30) Priority: 08.09.2005 JP 2005260269
(71) Applicant: Asahi Organic Chemicals Industry Co., Ltd., Nobeoka-shi, Miyazaki 882-0032 (JP)
(72) Inventor: TAKAHASHI, Hiroo, Funabashi-shi, Chiba 2740801 (JP); KATO, Toshiyuki, Fujimino-shi, Saitama 3560043 (JP); NONAKA, Takashi, Koriyama-shi, Fukushima 9638071 (JP); COPPOCK, Vincent, Bunbury, Cheshire CW69SJ (GB); ZEGGELAAR, Ruud, 6814 JK Arnhem (NL)
(74) Representative: O'Brien, John Augustine
(86) International application number: PCT/JP2006/317949
(87) International publication number: WO 2007/029855

(57) **Abstract**

This invention relates to a foamable resol type phenolic resin forming material comprising a liquid resol type phenolic resin, a foaming agent, a foam stabilizer, an additive and an acid curing agent, said additive containing a nitrogen-containing bridged cyclic compound and said foam stabilizer containing a chlorinated aliphatic hydrocarbon compound having 2 to 5 carbon atoms, and a phenolic resin foam product obtained by foaming and curing this forming material.

## Description

### Technical Field

The present invention relates to an expandable or foamable resol-type phenolic resin molding or forming material and a phenolic resin foam product. More specifically, the present invention relates to an expandable or foamable resol-type phenolic resin forming material that gives a phenolic resin foam product which is excellent in flame retardancy and fireproofness and also excellent in the long-term stability of heat insulation efficiency, which is excellent in strength and improved in brittleness and which has a high pH as compared with conventional resin foam products and has an excellent anti-corrosion property against a contact member, and a phenolic resin foam product having the above properties, obtained by foaming the above forming material.

### Background Art

Being excellent in the property of heat insulation and the properties of flame retardancy, fireproofness, etc., phenolic resin foam products are conventionally used as heat-insulating materials in the industrial fields of construction and some others.

Regarding the heat insulation performance of plastic heat-insulating materials including the phenolic resin foam products, it is known that the thermal conductivity thereof changes with the passage of time when and after they are produced. This is caused when gas in the foam cells is diffused out of a system. It is a phenomenon in which a foaming agent permeates cell membranes and is gradually replaced with air in atmosphere. It is also known that a phenolic resin foam product therefore causes a phenomenon in which the thermal conductivity thereof increases with time and the heat insulation performance thereof is degraded with time.

Since the heat insulation performance of a phenolic resin foam product is gradually impaired due to the above phenomenon, it is a key subject to ensure the long-term stability of heat insulation performance of the phenolic resin foam product.

It is known that a phenolic resin foam having closed cell structure has excellent stability of heat insulation performance against the passage of time. As a method for producing a phenolic resin foam product having closed cell structure, there has been proposed a method using a physical foaming agent containing chloropropane (for example, see JP5-87093B).

For further improving a phenolic resin foam in heat insulation performance what is important is that cells in the phenolic resin foam should be fine and have a closed cell structure. For this purpose, it has been proposed to mix a foam stabilizer (cell stabilizer) with a phenolic resin material when a phenolic resin foam product is produced. There have been reports made on a method for producing a phenolic resin foam, in which a castor oil-ethylene oxide adduct is used as the above foam stabilizer (for example, see JP61-268733A and JP63-39933A).

Phenolic resin foam products are used in various fields, and some use fields sometimes demand a phenolic resin foam product having high mechanical properties, in particular low brittleness. Various reports have been so far made on the improvement of heat insulation efficiency of a phenolic resin foam product and the stability thereof against the passage of time as described above. As the matter now stands, however, there is known almost no technique for improving the mechanical strength of a phenolic resin foam product while maintaining excellent heat insulation performance thereof.

Further, when a phenolic resin foam product is produced, there is generally used a method in which a foamable phenolic resin foaming material containing at least a phenolic resin, a foaming agent and a curing agent is foamed and cured, and the above curing agent is selected from acid curing agents such as sulfuric acid and organic acids including benzenesulfonic acid, toluenesulfonic acid, xylenesulfonic acid, etc. The thus-obtained phenolic resin foam product therefore contains the above acid curing agent, and for example, when it gets wet with rain, etc., it follows that the above acid curing agent is extracted with water. As a result, when a metallic substrate is in contact with the above phenolic resin foam product, or when a metallic substrate is present in the vicinity of the above phenolic resin foam product, there is a problem that the metal substrate is liable to be corroded.

### Disclosure of the Invention

Under the circumstances, it is an object of the present invention to provide an expandable or foamable resol-type phenolic resin forming material that gives a phenolic resin foam product which is excellent in flame retardancy and fireproofness. It is also excellent in the long-term stability of heat insulation performance, and is excellent in strength with improved brittleness and also has a high pH as compared with conventional resin foam products and has excellent anti-corrosion properties against a contact substrate, and a phenolic resin foam product having the above properties.

The present inventors have made diligent studies to develop a phenolic resin foam product having the above properties and as a result it has been found that the above object can be achieved by employing a foamable phenolic resin forming material that comprises a liquid resol type phenolic resin, a foaming agent, a foam stabilizer, an additive and an acid curing agent and that contains a specific compound as the foaming agent and contains a nitrogen-containing bridged cyclic compound as the additive. On the basis of this finding, the present invention has been accordingly completed.

That is, the present invention provides
(1) a foamable resol type phenolic resin forming material comprising a liquid resol type phenolic resin, a foaming agent, a foam stabilizer, an additive and an acid curing agent, the said additive containing a nitrogen-containing bridged cyclic compound and the said foam stabilizer containing a chlorinated aliphatic hydrocarbon compound having 2 to 5 carbon atoms,
(2) a foamable resol type phenolic resin forming material as recited in the above (1), which contains 0.1 to 10 parts by mass, per 100 parts by mass of the liquid resol type phenolic resin, of the nitrogen-containing bridged cyclic compound,
(3) a foamable resol type phenolic resin forming material as recited in the above (1) or (2), wherein the nitrogen-containing bridged cyclic compound is at least one member selected from quinuclidine, pydine and hexamethylenetetramine,
(4) a foamable resol type phenolic resin forming material recited in any one of the above (1) to (3), wherein the chlorinated aliphatic hydrocarbon compound has 2 to 5 carbon atoms like chloropropanes,
(5) a foamable resol type phenolic resin forming material recited in any one of the above (1) to (4), wherein the foam stabilizer contains a castor oil-ethylene oxide adduct obtained by adding more than 20 mol but less than 40 mol of ethylene oxide to one mole of castor oil,
(6) a foamable resol type phenolic resin forming material recited in any one of the above (1) to (5), which further contains a polyester polyol as a plasticizer,
(7) a foamable resol type phenolic resin forming material recited in any one of the above (1) to (6), which further contains aluminum hydroxide and/or calcium carbonate as an inorganic filler,
(8) a phenolic resin foam product obtained by foaming and curing the foamable resol type phenolic resin forming material recited in any one of the above (1) to (7),
(9) a phenolic resin foam product as recited in the above (8), which has a thermal conductivity of 0.022 W/m.K or less and has a moisture permeance of 60 ng/m2·s·Pa or less,
(10) a phenolic resin foam product as recited in the above (8) or (9), which has a pH of 4.0 or more and has a brittleness of 20 % or less,
(11) a phenolic resin foam product as recited in any one of the above (8) to (10), which has an independent cell ratio of 85 % or more and has an oxygen index of 29 or more,
(12) a phenolic resin foam product as recited in any one of the above (8) to (11), which has a facing material provided on at least one surface thereof, and
(13) a phenolic resin foam product as recited in the above (12), wherein the facing material is at least one member selected from a glass nonwoven fabric, a spunbonded nonwoven fabric, an aluminum-foil-clad nonwoven fabric, a metal plate, a metal foil, plywood, a calcium silicate plate, a plaster board and a wood-fiber-mixed cement plate.

According to the present invention, there can be provided a foamable resol type phenolic resin forming material that gives a phenolic resin foam product which is excellent in flame retardancy and fireproofness and also excellent in the long-term stability of heat insulation performance, which is excellent in strength and improved in brittleness and which has a high pH compared with conventional resin foams and has excellent anti-corrosion properties against a contact substrate, and a phenolic resin foam product having the above properties, obtained by foaming and curing the above forming material.

### Preferred Embodiments of the Invention

First, the foamable resol type phenolic resin forming material of the present invention will be explained.

The foamable resol type phenolic resin forming material of the present invention contains a liquid resol type phenolic resin, a foaming agent, a foam stabilizer, an additive and an acid curing agent and contains a plasticizer and an inorganic filler as required.

The above resol type phenolic resin includes phenolic resins obtained by reacting phenols such as phenol, cresol, xylenol, p-alkylphenol, p-phenylphenol, resorcinol, etc., or modified products thereof with aldehydes such as formaldehyde, p-formaldehyde, furfural, acetaldehyde, etc., in the presence of a catalytic amount of alkali such as sodium hydroxide, potassium hydroxide, calcium hydroxide, etc., while the resol type phenolic resin shall not be limited thereto. The weight ratio of the phenols and the aldehydes to be used is not specially limited, and the ratio of a phenol and an aldehyde by molar ratio is generally from approximately 1.0:1.5 to 1.0 to 3.0, preferably from 1.0:1.8 to 1.0:2.5.

In the present invention, the above foaming agent includes a chlorinated aliphatic hydrocarbon compound having 2 to 5 carbon atoms, and this chlorinated aliphatic hydrocarbon compound having 2 to 5 carbon atoms is a chlorinated product of a linear or branched aliphatic hydrocarbon having 2 to 5 carbon atoms. While the number of chlorine atoms bonded is not specially limited, it is preferably approximately 1 to 4. Examples of the above chlorinated aliphatic hydrocarbon compound include dichloroethane, propyl chloride, isopropyl chloride, butyl chloride, isobutyl chloride, pentyl chloride, isopentyl chloride, etc. These compounds may be used singly or in combination of two or more of these. Of these, chloropropanes such as propyl chloride and isopropyl chloride are preferred, and isopropyl chloride is particularly preferred.

When the above chlorinated aliphatic hydrocarbon compound is used as a foaming agent, the initial thermal conductivity of a foam product obtained is low.

The foaming agent for use in the present invention characteristically contains the above chlorinated aliphatic hydrocarbon compound. However, the foaming agent may optionally contain a proper amount of fluorinated' hydrocarbon compounds (alternatives for chlorofluorocarbon) such as 1,1,1,3,3-pentafluorobutane, etc., chlorofluorocarbon compounds such as trichloromonofluoromethane, trichlorotrifluoroethane, etc., hydrocarbon compounds such as butane, pentane, hexane, heptane, etc., ether compounds such as isopropyl ether, etc., gases such as nitrogen gas, oxygen gas, argon gas, carbon dioxide gas, etc., or a mixture of these gases to such an extent that they do not impair the performance and physical properties of the phenolic resin foam product of the present invention.

The amount thereof based on the chlorinated aliphatic hydrocarbon compound is preferably 0.1 to 20 % by mass, more preferably 0.5 to 15 % by mass.

In the present invention, the amount of the above foaming agent for use per 100 parts by mass of the above liquid resol type phenolic resin is generally 1 to 20 parts by mass, preferably 5 to 10 parts by mass.

In the present invention, as the above foam stabilizer, it is preferred to use a foam stabilizer containing a castor oil-ethylene oxide ("ethylene oxide" will be abbreviated as "EO" hereinafter) adduct.

Castor oil is a non-drying oil obtained from seeds of castor bean, etc., by a pressing method, and it contains unsaturated acids such as recinoleic acid, oleic acid, linoleic acid, etc., as main components and contains a small amount of saturated acids such as stearic acid, dioxystearic acid, etc.

In the above foam stabilizer, an adduct obtained by adding more than 20 mol but less than 40 mol of EO to one mole of the above castor oil is preferred.

The reason why the molar amount of added EO is preferably more than 20 mol but less than 40 mol in the adduct is as follows. When the molar amount of added EO in the adduct is more than 20 mol but lass than 40 mol, hydrophobic groups composed mainly of long-chain hydrocarbon groups of castor oil and hydrophilic groups composed mainly of polyoxyethylene groups formed by more than 20 mol but less than 40 mol of EO can be arranged so that they are well-balanced in a molecule, and an excellent surface activity can be attained. When a castor oil-EO adduct having such an excellent surface activity is used, cell diameters of the phenolic resin foam are kept small and cell walls thereof are imparted with flexibility, so that there is produced an effect that the occurrence of cracks of cell walls is prevented. The molar amount of EO forming the adduct is preferably 21 to 38 mol.

In the present invention, the above castor oil-EO adduct is used as a suitable component in the above foam stabilizer. In addition thereto, there may be used a dimethylpolysiloxane-polyoxyalkylene copolymer, a dimethylpolysilxoane-polyoxyethylene-polyoxypropylene copolymer, a castor oil-propylene oxide adduct, etc.

The content of the above castor oil-EO adduct in the foamable phenolic resin forming material, per 100 parts by mass of the phenolic resin, is preferably 1 to 5 parts by mass, more preferably 2 to 4 parts by mass. When the content of the castor oil-EO adduct is less than 1 part by mass, it is difficult to form uniformly small cells. When it exceeds 5 parts by mass, the water absorption of a formed phenolic resin foam product is increased and the production cost thereof increases.

In the present invention, a nitrogen-containing bridged cyclic compound is used as the above additive. It has been found that when the nitrogen-containing bridged cyclic compound is incorporated into the foamable phenolic resin forming material, the phenolic resin foam product obtained maintains good heat insulation performance and at the same time produces unexpected effects that it is excellent in mechanical strength and improved in brittleness, and it also has a higher pH compared with conventional resin foams and so has anti-corrosion properties.

Examples of the above nitrogen-containing bridged cyclic compound include quinuclidine, pydine, hexamethylenetetramine, etc. These may be used singly or in combination of two or more of these. Of these, hexamethylenetetramine is preferred in view of its effect and availability.

The amount of the above nitrogen-containing bridged cyclic compound for use per 100 parts by mass of the above liquid resol type phenolic resin is preferably 0.1 to 10 parts by mass, more preferably 0.3 to 7 parts by mass, from the viewpoint of a balance between its effect and economic performance.

In the present invention, the above acid curing agent is selected from inorganic acids such as sulfuric acid, phosphoric acid, etc., and organic acids such as benzenesulfonic acid, ethylbenzenesulfonic acid, p-toluenesulfonic acid, xylenesulfonic acid, naphtholsulfonic acid, phenolsulfonic acid, etc. These acid curing agents may be used singly or in combination of two or more of them.

Regarding a plasticizer that is used as required in the present invention, a plasticizer containing a polyester polyol is preferred.

The above polyester polyol is obtained by reacting a polycarboxylic acid and a polyhydric alcohol. Although not specially limited, the molecular weight thereof, as a weight average molecular weight, is preferably approximately 200 to 10,000, more preferably in the range of 200 to 5,000, from the viewpoint of the impartation of cell walls with flexibility and the inhibition of the deterioration that proceeds with the passage of time. Further, it preferably has at least two hydroxyl groups per molecule from the viewpoint of obtaining the above performance. The number of carboxyl groups in the above polycarboxylic acid per molecule is not specially limited so long as it is 2 or more. Further, the number of hydroxyl groups in the polyhydric alcohol per molecule is not specially limited so long as it is 2 or more.

The above polyester polyol can be obtained as a reaction product, for example, from a polycarboxylic acid having 2 to 4 carboxyl groups and a polyhydric alcohol having 2 to 5 hydroxyl groups. Preferred is a polyester polyol that is a reaction product from a dicarboxylic acid and a dihydric alcohol and that is composed mainly of a compound having a general formula (I), 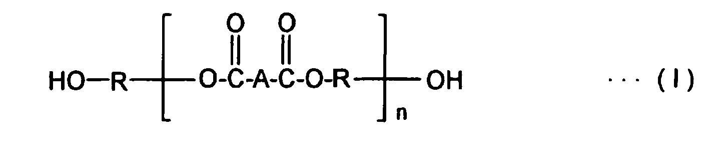 wherein A is a residue remaining after the removal of carboxyl groups from the dicarboxylic acid, R is a residue remaining after the removal of hydroxyl groups from the dihydric alcohol and n is an integer of 1 or more.

The dicarboxylic acid to form A in the general formula (I) includes an aromatic dicarboxylic acid, an aliphatic dicarboxylic acid and an alicyclic dicarboxylic acid. Examples of the above aromatic dicarboxylic acid include phthalic acid, isophthalic acid, terephthalic acid, naphthalene-2,3-dicarboxylic acid, naphthalene-1,4-dicarboxylic acid, naphthalene-2,6-dicarboxylic acid, etc. As an aliphatic dicarboxylic acid, saturated aliphatic dicarboxylic acids are preferred in view of the stability of a polyester polyol to be obtained, and examples thereof include adipic acid, pimelic acid, suberic acid, azelaic acid, sebacic acid, etc. As an alicyclic dicarboxylic acid, saturated alicyclic dicarboxylic acids are preferred in view of the stability of a polyester polyol to be obtained, and examples thereof include cyclohexane-1,2-dicarboxylic acid, cyclohexane-1,3-dicarboxylic acid, cyclohexane-1,4-dicarboxylic acid, etc.

The dihydric alcohol for forming R includes an aromatic glycol, an aliphatic glycol and an alicyclic glycol, and an aliphatic glycol and an alicyclic glycol are preferred.

Examples of the aromatic glycol include benzene dimethanols such as benzene-1,2-dimethanol, benzene-1,3-dimethanol, benzene-1,4-dimethanol, etc.; and ethylene oxide adduct or propylene oxide adduct of catechol, resorcinol, hydroquinone, 2,2-bis(4-hydroxyphenyl)propane (Bisphenol A). Further, when the above "R" is a residue from an aliphatic glycol, the "R" may have an ether bond (-O-) and/or an ester bond (-COO-) in its molecule. Examples of the above aliphatic glycol include alkane diols such as ethylene glycol, propylene glycol, 1,3-propanediol, 1,2-butanediol, 1,4-butanediol, 1,5-pentanediol, 1,6-hexanediol, 1,8-octanediol, 1,9-rionanediol, etc.; oxyalkylene glycols such as diethylene glycol, triethylene glycol, polyethylene glycol, dipropylene glycol, tripropylene glycol, polypropylene glycol, etc.; polyester diols that are ring-opening reaction products of lactones such as β-butyrolactone, γ-butyrolactone, δ-valerolactone, etc. with oxyalkylene glycols such as ethylene glycol, diethylene glycol, triethylene glycol, etc., and hindered glycols such as 2,2-dimethyl-1,3-propanediol (neopentyl glycol), 2,2-diethyl-1,3-propanediol, 2,2-dipropyl-1,3-propanediol, 2,2-diisopropyl-1,3-propanediol, 2,2-dibutyl-1,3-propanediol, 2,2-diisobutyl-1,3-propanediol, 2-methyl-2-dodecyl-1,3-propanediol, 2-butyl-2-ethyl-1,3-propanediol, 2-propyl-2-pentyl-1,3-propanediol, etc.

Further, examples of the alicyclic glycol include cyclopentane-1,2-diol, cyclopentane-1,2-dimethanol, cyclohexane-1,2-diol, cyclohexane-1,2-dimethanol, cyclohexane-1,3-diol, cyclohexane-1,3-dimethanol, cyclohexane-1,4-diol, cyclohexane-1,4-dimethanol, 2,5-norbornanediol, etc.

In the present invention, the aliphatic glycol and the alicyclic glycol are preferred as the dihydric alcohol. Particularly preferred are ethylene glycol, diethylene glycol, propylene glycol, dipropylene glycol, 1,4-butanediol, 1,6-hexanediol, neopentyl glycol, cyclohexane-1,2-dimethanol, cyclohexane-1,3-dimethanol and cyclohexanedimethanol.

In the general formula (I), n is an integer of 1 or more. It is a value in which the weight average molecular weight of the compound of the general formula (I) is preferably 200 to 10,000, more preferably 200 to 5,000.

In the present invention, the plasticizer containing a polyester polyol can be produced, for example, by using the above dicarboxylic acid and the above dihydric alcohol generally in an amount, per mole of the above dicarboxylic acid, of 1.2 mol or more, preferably 1.2 to 5 mol, more preferably 1.5 to 5 mol, and carrying out an esterification reaction thereof generally at a temperature of approximately 100 to 320°C, preferably 150 to 300°C. This esterification reaction is preferably carried out in the presence of an inert gas such as nitrogen gas, or the like. Further, there may be used a water-insoluble organic solvent that forms an azeotrope with water, such as toluene, xylene, or the like, or the reaction may be carried out under properly reduced pressure.

The above esterification reaction generally uses an esterification catalyst. Examples of the esterification catalyst include Bronsted acids such as p-toluenesulfonic acid, sulfuric acid, phosphoric acid, etc.; Lewis acids such as boron trifluoride complex, titanium tetrachloride, tin tetrachloride, etc.; organic metal compounds such as calcium acetate, zinc acetate, manganese acetate, zinc stearate, alkyltin oxide, titanium alkoxide, etc.; and metal oxides such as tin oxide, antimony oxide, titanium oxide, vanadium oxide, etc. In view of the oxidation stability of a polyester polyol to be obtained, mono butyl tin oxide and tetra-n-butyl ortho-titanate are preferred.

As another method, there can be employed a method in which an anhydride of the above dicarboxylic acid and the above dihydric alcohol are allowed to react in an ester exchange method in which a lower alkyl ester (alkyl having about 1 to 4 carbon atoms) of the above dicarboxylic acid and the above dihydric alcohol are allowed to react or a method in which a halide of the above dicarboxylic acid and the above dihydric alcohol are allowed to react in the presence of a hydrogen halide scavenger.

The thus-obtained reaction product is generally a mixture of compounds of the general formula (I) in which the values of n are different. The reaction product generally has a hydroxyl value of approximately 10 to 500 mgKOH/g.

The plasticizer for use in the present invention preferably contains a compound of the general formula (I-a) that is obtained by reacting the aromatic dicarboxylic acid with ethylene glycol, diethylene glycol or 1,4-butanediol in a molar ratio of approximately 1:1.5 to 1:5, 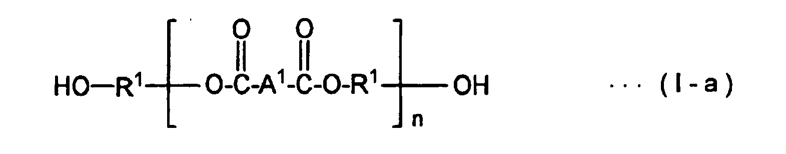 wherein A¹ is a 1,2-phenylene, 1,3-phenylene, 1,4-phenylene, 2,3-naphthylene, 1,4-naphthylene or 2,6-naphthylene group, R¹ is -CH₂CH₂-, -CH₂CH₂OCH₂CH₂- or - CH₂CH₂CH₂CH₂- and n is an integer of 1 or more, and such a plasticizer that contains a compound of the general formula (I-a) in which A¹ is a 1,2-phenylene, 1,3-phenylene or 1,4-phenylene group is particularly preferred.

The plasticizer containing the above polyester polyol has a structure containing an ester bond and a hydroxyl group excellent in hydrophilic nature and surface activity and is hence is well compatible with a hydrophilic phenolic resin liquid, and it can be homogeneously mixed with the phenolic resin. Further, when the above polyester polyol is used, it is assumed that since cells are kept from being unevenly distributed and are uniformly distributed in the entire foam product, a phenolic resin foam product uniform in quality is easily generated.

Further, when the above polyester polyol is added to the phenolic resin, it is assumed that, owing to its molecular structure giving surface activity and flexibility, the polyester polyol imparts the cell walls of the foam product with flexibility and hence produces an inhibition effect on deterioration phenomenon with time such as cracks of cell walls, etc. It is hence assumed that the long-term stability of heat insulation performance is improved as a consequence.

In the present invention, the amount of the above plasticizer used per 100 parts by mass of the above phenolic resin is generally 0.1 to 20 parts by mass. When the amount of the plasticizer is in the above range, there is well exhibited an effect that cell walls are imparted with flexibility without impairing other performances of the phenolic resin foam to be obtained. The amount of the above plasticizer is preferably 0.5 to 15 parts by mass, more preferably 1 to 12 parts by mass.

In the present invention, the above polyester polyol is used as an optimum component in the plasticizer, while it can be used as required in combination with other known plasticizers such as triphenyl phosphate, dimethyl terephthalate, dimethyl isophthalate, or the like.

The inorganic filler for use as an optional component in the present invention can serve to give a phenolic resin foam product that has low thermal conductivity and low acidity and that is improved in fireproofness. The amount of the inorganic filler used per 100 parts by mass of the above liquid resol type phenolic resin is generally 0.1 to 30 parts by mass, preferably 1 to 10 parts by mass.

Examples of the above inorganic filler include metal hydroxides and oxides such as aluminum hydroxide, magnesium hydroxide, calcium oxide, magnesium oxide, aluminum oxide, zinc oxide, etc., powders of metals such as zinc, magnesium, aluminum, etc., and carbonates of metals such as calcium carbonate, magnesium carbonate, barium carbonate, zinc carbonate, etc. These inorganic fillers may be used singly or in combination of two or more of these. Of these inorganic fillers, aluminum hydroxide and/or calcium carbonate are/is preferred.

The foamable resol type phenolic resin forming material of the present invention can be prepared, for example, by adding and mixing the above nitrogen-containing bridged cyclic compound and the above foam stabilizer with the above liquid resol type phenolic resin; further then adding/mixing the inorganic filler and the plasticizer as required to obtain a mixture, then adding the above foaming agent containing the chlorinated aliphatic hydrocarbon compound and the acid curing agent to the mixture, and feeding the resultant mixture to a mixer and stirring it.

The phenolic resin foam product of the present invention will be explained below.

The phenolic resin foam product of the present invention is obtained by foaming and curing the thus-prepared foamable resol type phenolic resin forming material of the present invention. The method for forming the above phenolic resin foam product includes, for example, (1) a method in which the forming material is cast on an continuous conveyor, (2) a method in which the forming material is partially cast and foamed, (3) a method in which the forming material is foamed under pressure in a mold, (4) a method in which the forming material is charged into a certain large space to form a foamed block and (5) a method in which the forming material is charged and foamed while it is introduced into a hollow space under pressure.

In a preferred method, the above foamable resol type phenolic resin forming material is discharged onto a carrier that is continuously moving, the thus-discharged material is passed through a heating zone to foam it and also to shape it, whereby a desired phenolic resin foam product is produced. Specifically, the above foamable resol type phenolic resin forming material is discharged on to a facing material on a conveyor belt. Then, another face material is placed on the forming material on the conveyor belt and the resultant set is introduced into a curing furnace. In the curing furnace, the set is pressed with another conveyor belt to adjust the phenolic resin foaming material to a predetermined thickness, and the foaming material is foamed and cured under conditions of approximately 60 to 100°C and approximately 2 to 15 minutes. The phenolic resin foam that comes out of the curing furnace is cut to a predetermined length.

The above facing material is not specially limited, and it can be generally selected from nonwoven fabrics of natural fibers, synthetic fibers such as a polyester fiber, a polyethylene fiber, etc., or inorganic fibers such as a glass fiber, papers, an aluminum-foil-clad nonwoven fabric, a metal plate and a metal foil. Preferred are a glass fiber nonwoven fabric, a spunbonded nonwoven fabric, an aluminum-foil-clad nonwoven fabric, a metal plate, a metal foil, a plywood, a construction panel, a particle board, a hard board, a wood-fiber-mixed cement plate, a flexible plate, a perlite plate, a calcium silicate plate, a magnesium carbonate plate, a pulp cement plate, a sheathing board, a medium density fiber board, a plaster board, a lath sheet, a volcanic vitreous composite plate, natural stone, a brick, a tile, a glass shaped material, a light-weight cellular concrete shaped material, a cement mortar shaped material and a shaped material using a water-curable cement hydrate as a binder component such as a glass-fiber-reinforced cement shaped material, etc. These materials may be used singly or in combination of two or more of them. Of these, it is particularly preferred to use at least one selected from a glass fiber nonwoven fabric, a spunbonded nonwoven fabric, an aluminum-foil-clad nonwoven fabric, a metal plate, a metal foil, a plywood, a calcium silicate plate, a plaster board and a wooden-fiber-mixed cement plate. The facing material may be provided on one surface of the phenolic resin foam, or such facing materials are provided on both surfaces thereof. When the facing materials are provided on both the surfaces, they may be different. Further, the facing material(s) may be later bonded to the surface(s) with an adhesive.

The phenolic resin foam product of the present invention preferably has a thermal conductivity of 0.022 W/m·K or less. When this thermal conductivity exceeds 0.022 W/m.K, the heat insulation performance of the phenolic resin foam product is insufficient. Further, the moisture permeation of the phenolic resin foam product of the present invention is generally 60 ng/(m²·s·Pa) or less for a thickness of 25 mm, preferably 55 ng/(m2·s·Pa) or less.

The brittleness of phenolic resin foam product of the present invention is preferably 20 % or less, more preferably 10 to 18 %. The pH thereof is preferably 4.0 or more, more preferably in the range of 5.0 to 8.0.

Further, substantially no holes exist on or through the cell walls, and the ratio of closed cells is generally 85 % or more, preferably 90 % or more, and the oxygen index is preferably 29 or more, more preferably 30 or more.

Methods for measuring the above properties of phenolic resin foams will be described in detail later.

In the phenolic resin foam product of the present invention, the cell walls are imparted with flexibility, and the deterioration thereof with time is inhibited and the phenolic resin foam product of the present invention can maintain stable heat insulation performance for a long period of time.

### Examples

The present invention will be explained in detail with reference to Examples hereinafter, while the present invention shall not be limited by these Examples.

Phenolic resin foam products obtained in the Examples were measured for physical properties according to the following methods.

### (1) Density

Measured according to JIS A 9511:2003,5.6 density.

### (2) Thermal conductivity

Square phenolic resin foam samples having sides 300 mm long each were used, and a low temperature plate was set at 10°C and a high temperature plate was set at 30°C. The samples were measured with a thermal conductivity tester HC-074 304 (supplied by EKO INSTRUMENTS CO., LTD.) according to the heat flux transducer method of JIS A1412-2:1999. A phenolic resin foam sample was left in a 70°C atmosphere for 4 hours and then measured for thermal conductivity, and the measured data was used as an initial thermal conductivity.

### (3) Estimated value of thermal conductivity in 25 years' time

According to ISO 11561 Annex B, a maximum temperature that can occur in an architectural structure is supposed to be 70°C. And, a phenolic resin foam sample was left in a 70°C atmosphere for 25 weeks and then thermal conductivity was measured for an estimated value in 25 years' time.

### (4) Brittleness

Measured according to a JIS A 9511:2003,5.14 brittleness test.

### (5) pH

0.5 gram of a phenolic resin foam sample finely pulverized to 250 µm or less (60 mesh) with a mortar, etc., was weighed and placed in a 200 ml Erlenmeyer flask with a ground-in stopper, 100 ml of pure water is added, and the flask is hermetically closed. After such a mixture was stirred with a magnetic stirrer at room temperature (23 ±5°C) for 7 days, pH was measured with a pH meter.

### (6) Average cell diameter

Four straight lines having a length of 9 cm each were drawn on a 50 times enlarged photograph of inside of a phenolic resin foam sample. The number of gas bubbles that the straight lines were drawn across were counted per straight line and 1800 µm was divided by an average value thereof (number of cells measured according to JIS K6402) to obtain a value, which was used as an average cell diameter.

### (7) Voids

A phenolic resin foam sample was cut nearly in the center thereof in its thickness direction in parallel with its front and back surfaces. A 200 % enlarged color copy was made from a 100 mm x 150 mm range (double in length and four times in area), a transparent section paper was used to count void areas occupying at least 8 squares having an area of 1 mm x 1 mm each, and an area percentage was calculated. That is, from the enlarged copy made, the above 8 squares corresponded to an area of 2 mm² in the actual foam cross section.

### (8) Moisture permeation for a thickness of 25 mm

Measured according to ISO 1663:1999 hard plastic foam - Method of determination of moisture permeation. Calcium chloride having a grain diameter of approximately 2.5 to 3.5 mm was used as a moisture absorbent.

### (9) Oxygen index

Measured according to JIS K7201-1 Plastic - Combustibility test method based on oxygen index - No. 2: Test at room temperature.

### (10) Closed cell ratio

Measured according to ASTM D2856.

### (11) Compressive strength

Measured according to JIS A 9511.

### (11) Anti-corrosion properties

A 300 x 300 mm galvanized iron plate (thickness 1 mm, weight per unit area 120 g/m²) was provided, and a phenolic resin foam sample of the same size was placed on the galvanized iron plate and fixed thereto so that it did not slip off, to prepare a test material. The test material was placed and left under an accelerated environment of 40°C and 100 %RH for 24 weeks, and thereafter it was visually observed for corrosion in the contact surface of the galvanized iron plate and the foam sample.

### Example 1

A three-necked flask having a reflux condenser, a thermometer and a stirrer was charged with 1,600 g of phenol, 2,282 g of 47 % weight concentration formalin and 41.6 g of a 50 % by weight sodium hydroxide aqueous solution, and a reaction was carried out at 81°C for 87 minutes. The reaction mixture was cooled to 40°C, neutralized with a 50 % weight concentration p-toluenesulfonic acid aqueous solution and distilled under reduced pressure and heat to a moisture content of 10 % by weight, to give a liquid resol type phenolic resin. This resin had a viscosity of 30,000 mPa·s at 25°C, a moisture content of 10 % by weight, a number average molecular weight of 430 and a free phenol content of 3.0% by weight.

To 100 parts by weight of the thus-obtained liquid resol type phenolic resin were added 3 parts by weight of a castor oil-EO adduct (molar amount of added EO 22) as a foam stabilizer, 5 parts by weight of a polyester polyol obtained by reacting phthalic acid and diethylene glycol in a molar ratio of 1:2 as a plasticizer and 3.5 parts by weight of hexamethylenetetramine as an additive, and they were mixed.
111.5 Parts by weight of the above phenolic resin mixture, 8 parts by weight of isopropyl chloride as a foaming agent and 15 parts by weight of a p-toluenesulfonic acid:xylelesulfonic acid mixture having a mix ratio of 2:1 as a curing agent were fed into a pin mixer, and they were stirred and mixed to prepare a foamable phenolic resin forming material. Then, this forming material was discharged into a frame with a glass nonwoven fabric set therein, the frame with the forming material therein was placed in a dryer at 80°C and the forming material was foamed and cured for 15 minutes to obtain a phenolic resin foam product. Tables 1 and 2 show the physical properties of the foam product.

### Example 2

A phenolic resin foam product was prepared in the same manner as in Example 1 except that 2 parts by weight of calcium carbonate was added as an inorganic filler and that the amount of the curing agent was changed to 18 parts by weight. Tables 1 and 2 show the physical properties of the foam product.

### Example 3

A phenolic resin foam product was prepared in the same manner as in Example 2 except that the amount of hexamethyleneteramine in Example 2 was changed to 7 parts by weight. Tables 1 and 2 show the physical properties of the foam product.

### Example 4

A phenolic resin foam product was prepared in the same manner as in Example 2 except that the foaming agent in Example 2 was replaced with isopropyl chloride:HFC-245fa having a weight ratio of 80:20. Tables 1 and 2 show the physical properties of the foam product.

### Example 5

A phenolic resin foam product was prepared in the same manner as in Example 2 except that the foaming agent in Example 2 was replaced with isopropyl chloride:nitrogen having a weight ratio of 98:2. Tables 1 and 2 show the physical properties of the foam product.

### Example 6

A phenolic resin foam product was prepared in the same manner as in Example 2 except that the foaming agent in Example 2 was replaced with isopropyl chloride:nitrogen:isopentane having a weight ratio of 98:1.5:0.5. Tables 1 and 2 show the physical properties of the foam product.

### Comparative Example 1

A phenolic resin product foam was prepared in the same manner as in Example 1 except that the hexamethylenetetramine in Example 1 was not added. Tables 1 and 2 show the physical properties of the foam product.

**Table 1**

| | Density (kg /m³) | Initial thermal conductivity [20°C] (W/m·K) | Estimated value of thermal conductivity in 20 years' time [20°C] (W/m·K) | Brittleness (%) | pH | Average cell diameter (µm) | Voids (%) | Anti-corrosion property |
|---|---|---|---|---|---|---|---|---|
| Ex. 1 | 30 | 0.0183 | 0.0191 | 12 | 4.2 | 100 | 1.0 | No problem |
| Ex. 2 | 30 | 0.0183 | 0.0197 | 14 | 6.1 | 100 | 1.0 | No problem |
| Ex. 3 | 30 | 0.0184 | 0.0195 | 13 | 6.7 | 110 | 1.1 | No problem |
| Ex. 4 | 30 | 0.0184 | 0.0193 | 13 | 6.3 | 95 | 1.2 | No problem |
| Ex. 5 | 30 | 0.0185 | 0.0197 | 14 | 6.3 | 100 | 1.0 | No problem |
| Ex. 6 | 30 | 0.0183 | 0.0192 | 12 | 6.4 | 95 | 1.0 | No problem |
| CEx. 1 | 30 | 0.0183 | 0.0220 | 30 | 2.7 | 100 | 1.0 | Red rust occurred on entire surface |

| | | | | | | | | |
|---|---|---|---|---|---|---|---|---|
| Ex. = Example, CEx. = Comparative Example | | | | | | | | |

**Table 2**

| | Moisture permeation [ng/ (m²·S· Pa)] | Oxygen index (%) | Closed cell ratio (%) | Compressive strength (N/cm²) |
|---|---|---|---|---|
| Example 1 | 40 | 32.6 | 96 | 20 |
| Example 2 | 42 | 32.6 | 94 | 19 |
| Example 3 | 44 | 32.5 | 95 | 19 |
| Example 4 | 42 | 32.6 | 95 | 20 |
| Example 5 | 43 | 32.5 | 94 | 19 |
| Example 6 | 41 | 32.4 | 95 | 20 |
| Comparative Example 1 | 40 | 32.5 | 95 | 13 |

### Industrial Utility

The phenolic resin foam product of the present invention contains a chlorinated aliphatic hydrocarbon compound having 2 to 5 carbon atoms as a foaming agent and contains a nitrogen-containing bridged cyclic compound, so that it is excellent in flame retardancy and fireproofness and maintains excellent heat insulation efficiency, and that it is also improved in mechanical strength and brittleness, has a high pH and is imparted with anti-corrosion properties.

## Claims

1. A foamable resol type phenolic resin forming material comprising a liquid resol type phenolic resin, a foaming agent, a foam stabilizer, an additive and an acid curing agent, said additive containing a nitrogen-containing bridged cyclic compound and said foam stabilizer containing a chlorinated aliphatic hydrocarbon compound having 2 to 5 carbon atoms.

2. The foamable resol type phenolic resin forming material of claim 1, which contains 0.1 to 10 parts by mass, per 100 parts by weight of the liquid resol type phenolic resin, of the nitrogen-containing bridged cyclic compound.

3. The foamable resol type phenolic resin forming material of claim 1 or 2, wherein the nitrogen-containing bridged cyclic compound is at least one member selected from quinuclidine, pydine and hexamethylenetetramine.

4. The foamable resol type phenolic resin forming material of any one of claims 1 to 3, wherein the chlorinated aliphatic hydrocarbon compound having 2 to 5 carbon atoms represented as chloropropanes.

5. The foamable resol type phenolic resin forming material of any one of claims 1 to 4, wherein the foam stabilizer contains a castor oil-ethylene oxide adduct obtained by adding more than 20 mol but less than 40 mol of ethylene oxide to one mole of castor oil.

6. The foamable resol type phenolic resin forming material of any one of claims 1 to 5, which further contains a polyester polyol as a plasticizer.

7. The foamable resol type phenolic resin forming material of any one of claims 1 to 6, which further contains aluminum hydroxide and/or calcium carbonate as an inorganic filler.

8. A phenolic resin foam product obtained by foaming and curing the foamable resol type phenolic resin forming material of any one of claims 1 to 7.

9. The phenolic resin foam product of claim 8, which has a thermal conductivity of 0.022 W/m·K or less and has a moisture permeation of 60 ng/m²·s·Pa or less.

10. The phenolic resin foam product of claim 8 or 9, which has a pH of 4.0 or more and has a brittleness of 20 % or less.

11. The phenolic resin foam product of any one of claims 8 to 10, which has a closed cell ratio of 85 % or more and has an oxygen index of 29 or more.

12. The phenolic resin foam product of any one of claims 8 to 11, which has a facing material provided on at least one surface thereof.

13. The phenolic resin foam product of claim 12, wherein the facing material is at least one member selected from a glass nonwoven fabric, a spunbonded nonwoven fabric, an aluminum-foil-clad nonwoven fabric, a metal plate, a metal foil, plywood, a calcium silicate plate, a plaster board and a wood-fiber-mixed cement plate.
